# EUROPEAN PATENT APPLICATION

(11) **EP 2 246 955 A2**
(43) Date of publication of application: **03.11.2010**
(21) Application number: 10161208.3
(22) Date of filing: 27.04.2010
(51) Int. Cl.: H02J 3/00, H02J 3/04, G06Q 50/00

(54) **Apparatus for actuating and managing electric nets and electric energy acquired/produced by a user/producer**

(30) Priority: 27.04.2009 IT MI20090711
(71) Applicant: Magnani, Sandra, 20052 Monza (IT)
(72) Inventor: Magnani, Sandra, 20052 Monza (IT)
(74) Representative: Raimondi, Margherita

(57) **Abstract**

Apparatus for forming electricity network nodes, characterized in that it comprises two input/output sides respectively, each of which comprises a plurality of input ports (INB1,...,INBn; INA1,...,INAn) and a plurality of output ports (OUTA1,...,OUTAn; OUTB1,...,OUTBn) which receive energy from a respective input port via a control matrix (1000) and allow it to flow out externally and in that said apparatus is provided internally with local control and management means which are connected to the matrix and the ports by means of a corresponding bus.

## Description

The present invention relates to an apparatus, a network and a method for forming and managing in an optimized manner so-called "intelligent" or "active" electricity networks.

It is known that the electric energy technology sector is currently undergoing changes as a result of a number of factors which include:
- liberalization of the market, which is aimed at allowing more producers the possibility of offering electric energy at varied prices on the market;
- the need to avoid the - in some cases disastrous - consequences of faults on international transmission lines;
- the large-scale growth of production based on renewable energy sources, resulting, in particular, for the first time in the production of energy outside the domain of the utility companies who buy and distribute the energy, without having produced it, and therefore lose control over the production itself.

All these factors result in the need to:
- develop the entirely hierarchical structure of the present-day electricity networks in such a way that there is an increasingly greater separation between production, transmission and distribution;
- ensure reliable and intelligent management of different areas of interaction between production, transmission, distribution and consumption;
- minimize the critical impact of the spread of defects/faults from electrical systems via different supply channels (transmission and distribution networks and trans-national boundaries).

In connection with the so-called operational boundaries, i.e. the network points at which producers and consumers of electric energy interact with each other, conditions arise such that, on the one hand, the users would like to be able to choose the best option available in different moments of time, while, on the other hand, the producers (high-voltage lines) and/or the operators or "utilities" responsible for electric energy distribution and transmission (medium-voltage lines) would like to sell to the consumer at the best possible price all the energy produced/acquired and transferred, also taking into account that the reference prices at these boundaries may be negotiated on the basis of hourly tariffs and/or on the basis of dynamic tariffs which, in certain cases, are related to the energy exchange market.

It is therefore extremely difficult both for the producers/utilities and for the end users to manage in the best manner possible the purchase/sale of energy without the aid of suitable mechanisms which are able to perform complex calculations rapidly.

In addition, with the widespread use of renewable energy sources, the user also becomes the producer of electric energy and must decide whether it is more convenient to use electric energy produced internally or obtain it externally.

The abovementioned evolution of the network requirements therefore gives rise to the need to develop an apparatus and a method for controlling said apparatus, suitable for the creation of electricity networks which allow:
■ two-way transmission of the energy at any point in the network;
■ definition of redundant transmission lines protecting each other with the possibility of switching energy transmission from one line to another in the event of a fault on one of said lines;
■ automatic and real-time monitoring of the operational boundaries between different bodies (producers, transmission sources, distributors, consumers) for controlling the quality of the energy supplied from one to the other;
■ possibility for each operator to supervise their own electricity network infrastructure by monitoring in real time also the incoming current supplies so as to be able to disconnect them should they represent a potential threat for the equilibrium of their own network;
■ possibility of the operator, in the event of a fault affecting a part of their own network, to redirect the current supplies entering their network via alternative routes so as to minimize the impact of the disturbance due to the fault.
■ dynamic selection by the user of the supply source, based on the evaluation of predefined parameters;
■ control of the devices, allowing the application of tariffs which vary depending on the time bands or are dynamically aligned with the prices on the energy exchange market.

These results are achieved according to the present invention by an apparatus for the optimized management of electric energy by users/producers according to the characteristic features of Claim 1, an electricity network provided with said apparatus according to the characteristic features of Claim 7, and associated control processes.

Further details may be obtained from the following description of a non-limiting example of embodiment of an electric energy connection and exchange apparatus according to the present invention provided with reference to the accompanying drawings in which:
Figure 1 shows a schematic illustration of the apparatus according to the invention;
Figure 2 shows a block diagram of a first embodiment of the apparatus according to the present invention in a minimum configuration;
Figure 3 shows a detailed block diagram of the apparatus according to Fig. 2;
Figure 4 shows a block diagram of a second, more general, example of application of the apparatus according to the present invention;
Figure 5 shows a detailed block diagram of the apparatus according to Fig. 4;
Figure 6 shows a schematic illustration of a distribution network with nodes and associated control flows according to the present invention;
   and
Figure 7 shows a schematic illustration of the electrical flows of a network according to the present invention with terminal network nodes connected to external units.

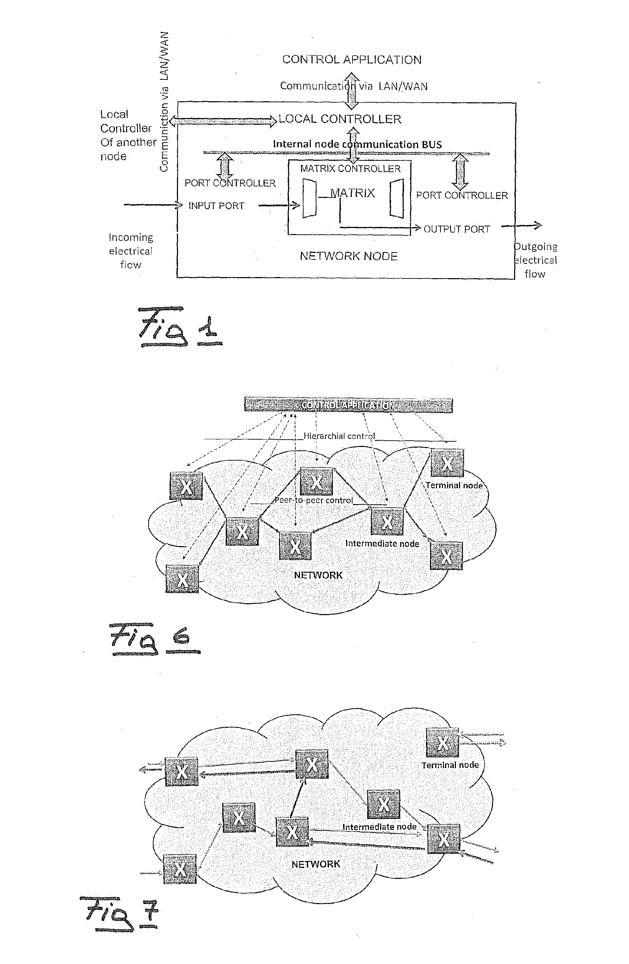

As shown in Fig. 1, the general architecture of an apparatus according to the present invention forming a network node has two input/output sides, A and B respectively, each of which comprises a plurality of input ports INB1,...INBn,; INA1,...1NAn and a plurality of output ports OUTA1...OUTAn and OUTB1...OUTBn which receive energy from a respective input port via a control matrix 1000 and transmit it externally.

In greater detail, each input/output port envisages devices which are conventional per se and therefore not shown, these being able to measure and analyse the characteristics of the current which reaches their input.

In particular each port has:
- an electronic system with memories containing the configurable (digital) operating parameters sent to it by the local controller 1350, where the expected value and the tolerance range with respect to the expected value are configured for each of these values;
- means for analog/digital conversion of the signals received at the input so as to allow comparison with the digital values stored.

These stored values are compared in real time with the characteristics of the incoming currents so as to check for correspondence with at least those characteristics listed in the following tables.

The parameters monitored by each port are at least the following for each current phase:

| | |
|---|---|
| 1 | Input active power |
| 2 | Export active power |
| 3 | Input reactive power |
| 4 | Export reactive power |
| 5 | Input active energy |
| 6 | Export active energy |
| 7 | Input reactive energy |
| 8 | Export reactive energy |

Moreover, each port measures the following aggregate values of the incoming flow, i.e. the combined effect of the various current phases (e.g. three-phase):

| | |
|---|---|
| 1 | Input aggregate active power |
| 2 | Export aggregate active power |
| 3 | Input aggregate reactive power |
| 4 | Export aggregate reactive power |
| 5 | Reactive aggregate power quadrant 1 |
| 6 | Reactive aggregate power quadrant 2 |
| 7 | Reactive aggregate power quadrant 3 |
| 8 | Reactive aggregate power quadrant 4 |
| 9 | Input aggregate active energy |
| 10 | Export aggregate active energy |
| 11 | Input aggregate reactive energy |
| 12 | Export aggregate reactive energy |
| 13 | Reactive aggregate energy quadrant 1 |
| 14 | Reactive aggregate energy quadrant 2 |
| 15 | Reactive aggregate energy quadrant 3 |
| 16 | Reactive aggregate energy quadrant 4 |

Said control means check whether the value of each parameter received at the input falls within a predefined and associated tolerance range of an expected value for that parameter and, if this is not the case, they generate alarm signals sent to a local controller via said BUS on which the following data is also transmitted:
- Port alarm signal
- Date
- Time
- Unique port identification
- Type of fault detected
- Fault severity indicator
- Fault status (on/off)
- Value detected in real time
- Expected value
- Tolerance range

The matrix 1000 which interconnects inputs and outputs comprises a first set of programmable selector switches 1100 and a second set of programmable selector switches 1200 and a control logic 1300 which operates them on the basis of the information which is set by a local controller 1350. In the event of a fault detected by the input port, the port itself signals the fault to the local controller 1350 which orders the matrix to interrupt the flow passing through the node.

"Node flow" refers to the electric flow which is enabled to pass from an input port of the node to an output port of the same node following activation of a specific configuration of the matrix switches.

The node flow is a one-way physical parameter, but two-way flows may be created by means of two one-way node flows in opposite directions.

The output ports receive at their input the current which flows out from the matrix. Detection of faults in this flow usually indicates a transient fault situation which is terminated when the matrix interrupts the node flow; alternatively it indicates a matrix fault when the input port associated with it does not detect any fault at the input.

The matrix 1000 may also generate alarm signals which it sends to the node controller 1300 in particular should it detect faults within the node and/or the matrix.

The format of these alarm signals is compatible with that of the alarm signals generated by the other components of the apparatus, but within this format these signals assume different meanings such as:
- Matrix alarm signal
- Date
- Time
- Unique identification (a constant)
- Type of fault detected
- Fault severity indicator
- Fault status (on/off)

The programmability of the matrix constitutes an element of flexibility within the system which is of great importance and also allows the implementation of special mechanisms for managing redundant network flows, as will emerge more clearly below.

According to the invention it is also envisaged that the input/output ports may be equipped with a redundancy system for the operating flows so as to prevent device port faults from adversely affecting the flow of energy across a node.

In particular, two or more ports of the same node may be configured so as to protect each other, i.e. such that a flow entering one port of a node may also be sent to the input of another port, called protection port, of the same node, which is not used during normal operation, but in the event of a fault affecting the active input port receives the electric flow which is no longer supplied to the defective active port.

When the protection port does not have current flowing through it, the condition is referred to as a 1+1 protection (or passive redundancy).

When another electric flow received by the protection port is interrupted in the case of protection being activated, so that the flow of the faulty active port, considered to be priority, may pass through it, the condition is referred to as 1:1 protection.

The protection configuration is known both to the local controller and to the remote controller.

The local controller is the node component which is responsible for implementing the "protection activation" procedure described below, interacting both with the ports and with the matrix:
The input port sends an alarm signal to the matrix
   1. The local controller recognizes the alarm signal
   2. The local controller checks whether the defective port is associated with another port configured for protection;
   3. In this case the local controller instructs the matrix to receive at its input the traffic from the other protection port which is thus connected to the output port.

The apparatus according to the invention is conveniently used as a node in an electrical network and, depending on its position and its associated connections, it is possible to distinguish between so-called:
- terminal network nodes: i.e. when a node interfaces also with flows which originate from/are directed towards outside the network;
- intermediate network nodes: i.e. when a node interfaces with flows which originate from/are directed towards only other network nodes.

In this latter architecture the nodes are connected together so as to create a network of one-way and/or two-way electric flows (logical association of one-way flows in opposite directions) with a mesh topology.

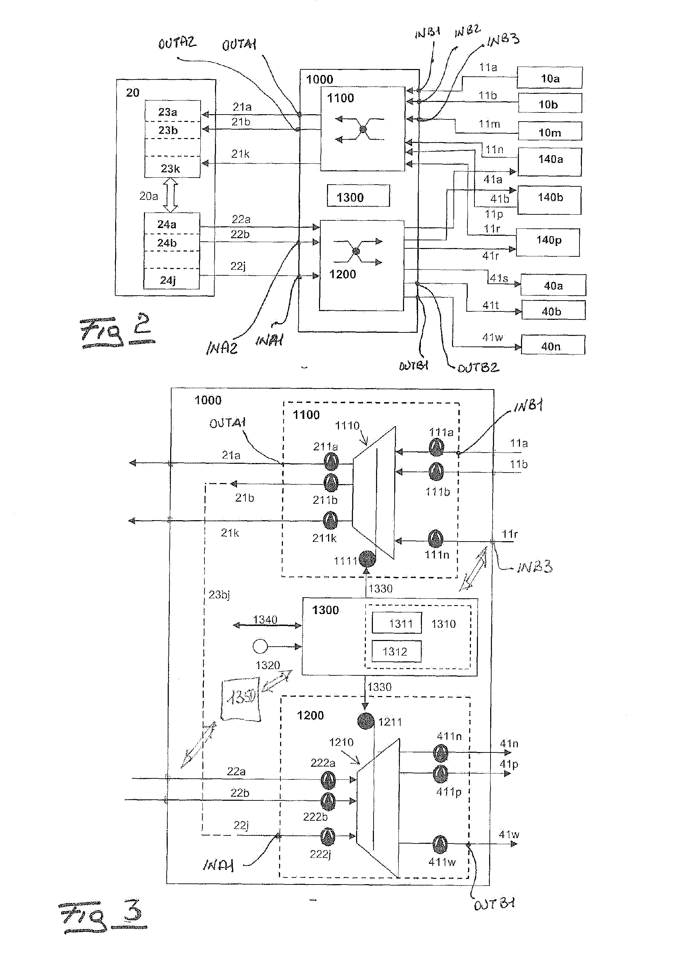

As shown in the example of configuration in Fig. 2 it is envisaged arranging the apparatus 1000 according to the invention which forms the network node, between:
- at least one entity 20, which is referred to below for the sake of simplicity of description by the term "user/producer", it being understood that this entity has the main requirement of receiving a flow of electric energy from a connected node, but is also able to send in the opposite direction electric energy flows directed to another node.

The blocks 21 and 22 shown in Fig. 2 schematically represent the two functions of the said entity 20, i.e. user function 21 and producer function 22. The arrow 20a indicates the energy flow which may flow from the block 22 to the block 21 within the entity 20.
- at least two entities, 10a and 10b respectively, each defined below, for the sake of simplicity of the description, by the term "supplier", able to supply electric energy to a connected node 1000; and
- at least two entities, 40a and 40b respectively, each defined below, for the sake of simplicity of the description, by the term "purchaser", able to purchase electric energy from external suppliers.
- the apparatus 1000 therefore comprises:
   - ) a first switching block 1100 which is supplied by inputs 11a,11b and corresponds to one of the two one-way directions of the apparatus and is connected to respective outputs 21a,21b;
   - ) a second switching block 1200 which is supplied by inputs 22a,22b and designed for the other one-way direction of flow and connected to respective outputs 40a,40b;
   - ) a central processing and control unit 1300 which manages operation of the two said switching blocks 1100 and 1200 and which comprises internally a central controller 1350.

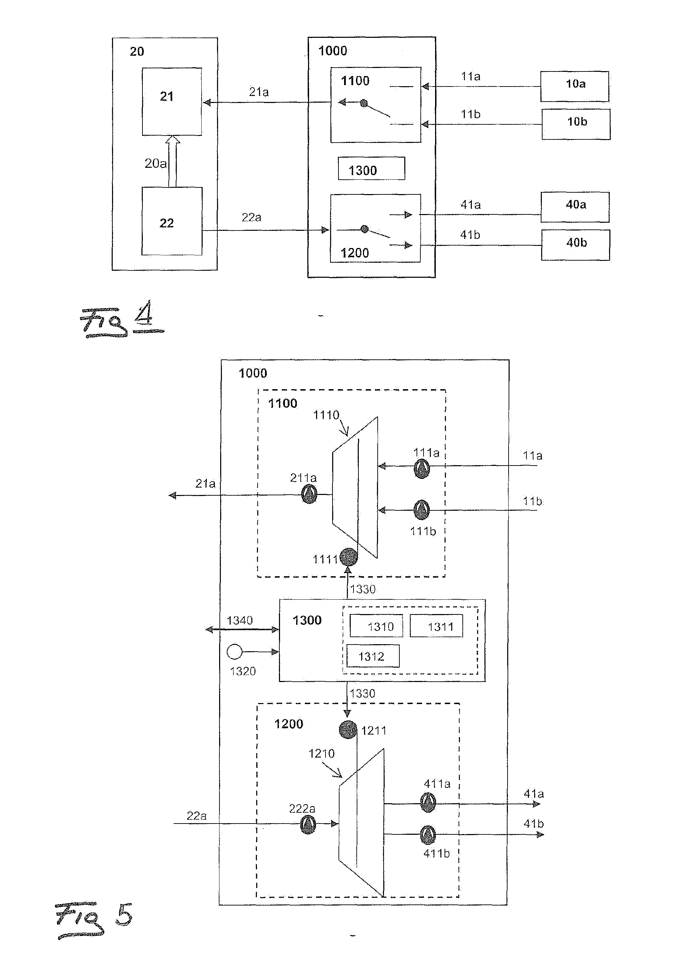

With reference also to Figure 5, the first switching block 1100 comprises internally a switching device 1110, the inputs of which are connected to the suppliers 10a,10b via respective lines 11a,11b along which an associated energy meter 111a,111b is installed, each meter being connected to the central unit 1300 in a conventional manner so as to provide the data relating to the electric energy which flows from each producer 10a,10b to the user 21. The output of the switching device 1110 is connected to the user 21 via the line 21a along which a corresponding meter 211a is arranged, said meter being in turn connected to the central unit 1300 so as to provide data relating to the electric energy which flows, to the load, schematically indicated by the block 21, of the user/producer 20.

Said switching block 1110 is associated with a selector switch 1111 for switching the switching device 1110 so as to connect either or both the input lines 11a,11b to the output line 21a, as required/convenient, and therefore allow the acquisition of electric energy from any one of the suppliers 10a,10b.

The second switching block 1200, corresponding to the opposite switching direction of the matrix, comprises internally a switching device 1210, the input of which is connected to the producer block 22 of the user/producer 20, via the line 22a, which has, installed along it, an energy meter 222a which is connected to the central unit 1300 in a conventional manner so as to provide the data relating to the electric energy which flows from the producer 22 to either purchaser 40a,40b.

The output of the device 1210 is connected, via the lines 41a,41b, to the purchasers 40a,40b and therefore allows the user/producer 20 to transfer energy as required/convenient.

A corresponding meter 411a,411b is arranged along the lines 41a,41b, each being connected to the central unit 1300 so as to provide the data relating to the electric energy which flows towards each purchaser.

The central unit 1300, which corresponds to the local processing controller, in turn comprises:
- a memory block 1310 which stores internally all the information relating to the conditions for sale/purchase of energy by each supplier 10a,10b (cost/price, time band for application of the cost/price, etc.).
- a memory block 1311 for storing the costs of the energy produced on its own;
- a memory block 1312 for storing the data relating to the primary sources for the production of electric energy in order to calculate the corresponding percentages of CO₂ emissions;
- a clock 1320 for checking the time;
- lines 1330 for connection to the actuators for operating the selector switches 1111, 1211 of the two blocks 1100 and 1200 for controlling the electrical connections;
- a LAN/WAN interface 1340 for allowing: interactive access of the operators to the apparatus, for example for manual insertion of data and the like; the acquisition in real time of the price/cost variations of the various energy sources; an instantaneous energy balance of the "producer/consumer" 20.

This latter information, i.e. the difference between the requirement for electric energy to be used internally and the electric energy produced internally by the user/producer 20, can be used to determine the quantity of electric energy which must be purchased from the suppliers 10a, 10b or the quantity of electric energy which may be sold to the purchasers 40a, 40b, in the case where the energy produced internally exceeds the requirement.

With this configuration the operating principle of the apparatus is as follows:
- after connection of the suppliers 10a,10b, purchasers 40a,40b and user/producer 20 to the apparatus 1000;
- all the data relating to the cost/price of the energy which can be sold/purchased by each supplier during the various daytime hours and on the various days of week/month/year, the regulatory conditions and regulations governing CO₂ emissions, and the data relating to the costs for internal production of the energy by the user/producer are stored in the associated memory blocks 1310,1311,1312;

- the clock 1320 is started;
- the step for acquiring the data relating to the momentary demand or surplus of electric energy of the user/producer 20 to be exchanged with the suppliers 10a,10b and/or purchasers 40a,40b is started.

At this point the apparatus is able to select both the most suitable supplier 10a,10b, depending on each time band, for purchase of the energy required to meet the demand and the most suitable purchaser 40a,40b to whom any energy produced on its own and exceeding the momentary demand is to be transferred. In greater detail:
if the "producer/consumer" 20 must purchase energy from the suppliers 10a,10b the central processing unit 1300 checks the time and the supply conditions of the individual suppliers 10a,10b and decides which of them to use, connecting the corresponding line 11a or 11b (or both lines) to the line 21a by means of the selector switch 1111 which correspondingly switches the switching device 1110, starting monitoring of the consumption on the input meters 111a,111b and output meter 211a of the apparatus 1000.

If, on the other hand, the "producer/consumer" 20 is in a position to transfer energy to the purchasers 40a, 40b, the central processing unit 1300 checks the time of processing and the corresponding conditions for purchase by the individual purchasers 40a,40b and decides which of them is to be allocated energy (or chooses both of them), connecting the corresponding line 41a,41b to the line 22a by means of the switching apparatus 1210 which is controlled by the selector switch 1211 and starting monitoring of the consumption on the input meter 222a and on the output meters 411a,411b of the interconnection block 1200.

All these operations are controlled by the central processing unit 1300 of the apparatus 1000 which continuously monitors the energy balance of the "producer/consumer" and which is therefore able to assess the need to purchase a certain quantity of electric energy from external suppliers 10a,10b or transfer the energy quota which is produced internally and exceeds the amounts used. Since said central unit 1300 has information updated in real time as to the prices applicable to both purchase and sale of electric energy from/to said suppliers, it may decide what are the best exchange policies and implement them, activating the interconnections via the selection blocks 1100 and 1200, i.e. matrix, of the apparatus 1000.

According to a further embodiment the apparatus according to the present invention may be configured as a terminal network node, as shown in Figs. 4 and 5, which show examples of configurations which are more general compared to that shown in Figures 2 and 3 and in which the number m of "suppliers", 10a, 10b, ...10m, from which electric energy may be purchased has been generalized; the number n of "purchasers", 40a, 40b, ... 40n to whom electric energy may be supplied has also been generalized moreover it has been assumed that there are p "suppliers/purchasers", 140a,140b,..., 140p which may both supply and acquire electric energy.

Each "supplier" or "supplier/purchaser" has an input connection to the switching device 1110 of the block 1100, which therefore has a number, r=m+p, of input lines, 11a, 11b, ... 11r. A corresponding meter 111a, 111b, ... 111r is arranged along each line 11a, 11b ... 11r, each being connected to the central unit 1300 so as to provide the data relating to the electric energy being transferred.

Each "purchaser" or "supplier/purchaser" has an output connection from the switching device 1210, inside the block 1200, which therefore has a number w=n+p of outputs 41a,41b, ... 41w. A corresponding meter 411a, 411b,... 411w is arranged along each line 41a, 41b, ... 41w, each being connected to the central unit 1300 so as to provide the data relating to the electric energy being transferred.

On a more general level it is also considered that the user/producer 20 contains a generic number k of user blocks 23a, 23b, 23k and a generic number j of producer blocks 24a, 24b, 24j. The numbers k and j of said user and producer blocks, respectively, do not have any limit from a logic point of view and depend only on the actual functional configuration of the user/producer 20.

Still with reference to Figures 6 and 7, the switching device 1110 of the apparatus 1000 has a number k of output connections, 21a, 21b, ... 21k, each with a current meter 211a, 211b, ... 211k, to k users 23a, 23b, 23k, and the switching device 1210 of the apparatus 1000 has a number j of output connections, 22a, 22b, ... 22j, each with a current meter 221a, 221b, ... 221j, from the j producers 24a, 24b, 24j of the user 20.

It is pointed out that one reason, for example, for having several separate connections, 22a, 22b, ... 22j, from the producers 24a, 24b, ... 24j to the switching device 1210 is that each producer 24a, 24b, ... 24j, may have a different type of energy source (for example, thermoelectric, wind, photovoltaic), and therefore it may be required to distinguish between these different sources in accordance with the various regulations and tax regimes which govern the exchange of electric energy depending on the type of primary source.

This same reasoning also applicable to the various output connections, 21a, 21b, ... 21k, from the switching device 1110 to the users 23a, 23b, ... 23k: each of said lines may have a different primary energy source and therefore be subject to specific regulations and tax regimes.

Figure 4 shows a block diagram which represents more generally the diagram shown in Figure 5 and shows a switching block 1100 which comprises a switching device 1110 which is controlled by a selector switch 1111, and a switching block 1200 which comprises a switching device 1210 controlled by a selector switch 1211.

The said selector switches 1111 and 1211 are controlled by the central unit 1300 via the connections 1330.

The said switching device 1110 may connect any input 11a, 11b, ... 11r, to any output 21a, 21b, ... 21k, and moreover may connect the same input to several outputs or several inputs to the same output. Similarly, the said switching device 1210 may connect any input 22a, 22b, ... 22j, to any output 41a, 41b, ... 41w, and moreover may connect the same input to several outputs or several inputs to the same output.

The method of operation of the more general embodiment of the apparatus 1000 described above is similar to that described above for the minimum configuration and therefore the description already given is merely summarized.

The central unit stores the information relating to: conditions for sale/purchase of energy by each supplier 10a,10b ... 10r (cost/price, time band for application of the cost/price, etc.); costs of the on its own produced energy; data relating to the primary sources in order to calculate the corresponding percentages of CO₂ emissions.

The central control unit is updated in real time via the LAN/WAN connection as to any variations in the said purchase/sale conditions and the energy balance of the user/producer 20.

In this way the apparatus 1000 is able to select at any moment both the most suitable supplier for purchase of the energy required to meet the demand and the purchaser who most conveniently may be allocated any energy produced on its own and exceeding the momentary demand.

A further functional feature of the energy management apparatus 1000, which is shown in Figure 4, but may also be represented more generally in relation to the initial minimum configuration, is that it allows direct connection of the output lines from the interconnection block 1100 to the input lines of the interconnection block 1200. An example of this type of connection is shown in Figure 4 where the output line 21b from the interconnection block 1100 is connected to the input line 22j of the interconnection block 1200 via the connection 23bj. The result of this connection is that the electric energy received from external suppliers is in turn switched externally so as be transferred to other purchasers, for example for cost-efficiency reasons (energy trading), in order to honour power supply contracts when internal production is insufficient, or for other similar reasons.

With the apparatus according to the invention it is possible to provide a specific "network architecture", such as the global behaviour of a set of nodes described in the present invention and interconnected by electric links and by LAN/WAN communication lines which allow logic interaction thereof in a clearly defined manner as a result of the specific functional capacities of each node.

The network is therefore a functionally homogeneous system which is formed by apparatus described in the present invention, electrical connections and data communication links between them.

In the network thus defined the following may be distinguished:
- intermediate nodes - i.e. nodes which are connected electrically to nodes of the same type
- terminal nodes - i.e. nodes which are connected electrically to nodes with different physical and control characteristics.
   Energy flows which pass through the network are termed "end-to-end" when they enter into the network from the outside via a terminal node and are directed through the network itself and a terminal node (also the same node via which they entered) and pass from this node outside the network.

The network which uses nodes according to the invention therefore allows the configuration and management of electric flows which are independent of each other within a mesh network, i.e. a non-hierarchical network.

The concept of end-to-end electric flow is an example of a "logic parameter" which does not fall within the control of the individual node.

This logic level is in fact managed by the control application described below.

The apparatus according to the invention comprises a complex control logic which is schematically represented in Fig. 1.

The overall control system may be understood as being of the "distributed" type since it involves the interaction between components which reside physically within the node and components which are physically external, such as the control application, although they form an integral part of said logic and therefore may be regarded as node components which are externally positioned in order to optimize the design thereof.

Within the node both the ports and the matrix have a small control and processing portion. They receive commands from the local controller (1300) which is "master" of the node logic and send alarm signals to it, i.e. asynchronous signals which indicate the occurrence of events which are anomalous compared to the expected behaviour. Communication within the node is strictly hierarchical as regards setting of the configuration: the information is transmitted from the local controller to the ports and the matrix. The ports and the matrix do not communicate directly with each other.

The local controller of each node may interact via WAN/LAN with components which are outside the node and consist of:
- The control application (for configuration commands and alarm signals)
- Other nodes (for signalling faults or exchange of identification data)

In greater detail:
- The LOCAL NODE CONTROLLER 1300 is the component which:
   ○ Knows the node:
      ■ Unique identification of the network node
      ■ Name
      ■ Location
      ■ Addresses for communication within a geographical network
   ○ Knows the physical configuration of the node
   ○ Communicates with the ports and with the matrix
   ○ Knows the logic configuration of the node and all the configuration parameters of each individual configurable component of any type present in the node.
   ○ Communicates with the control application in order to receive commands and send alarm signals. The control application never communicates directly with the ports and with the matrix. It receives and records all the alarm signals from all the "intelligent" components of the node (e.g. ports and matrix).
      • Knows the one-way and two-way node flows (connection of one input port with an output port via the matrix).
      • Communicates with other network nodes for the exchange of signals (for example exchange of data such as identification and node address data) or the signalling of faults (e.g. the lack of an input current to a specific port). The local controller of each node must be connected via LAN/WAN to the local controller of all the other modes from which it receives electric input flows and all the nodes to which the electric flows output from the node are directed. This results in a "communications network topology" which reproduces exactly the topology of the electricity network, the nodes of which correspond to the devices described in the present invention. It is therefore assumed that the nodes which are physically connected to the communications network are addressable on the latter and that the most important part for control purposes is the information content of the communication.

Non-exhaustive examples of the information which the nodes exchange with other network nodes are as follows:
- List of all the nodes in the same network
- List of the information necessary for communication with any other node (LAN/WAN addresses).
- Table of the flows in the network which pass through it and list of the nodes (including itself) passed through.

### • REMOTE CONTROL APPLICATION

The control application corresponds to the highest logic level in the hierarchy of the network control functions. It is able to send to each individual node connected to it the desired configuration (also in terms of each individual port and the matrix). The control application stores in its database all the nodes of the network in their complete current state configuration, all the electrical connections and all the LAN/WAN connections. In other words, it stores the entire network topology. Each device must be able to manage a communications interface with the remote control application.

The task of this application is to configure the network logic elements (viz. network architecture), such as the end-to-end flows and the network flow protection systems, via the individual configurations of the various devices.
1.The control application defines for each node the free "ports"
2.The central control application checks whether the free ports are "connectable with each other" so as to create an electric flow which passes through several nodes
3.If this is possible it sends node flow configuration commands to the controller of each node.
   a.The controller of each node
      i. Sends the configuration to the ports
      ii. Configures the matrix in a suitable manner for generating node flows which involve the ports indicated.
4.If any one of the operations indicated in 1-3 is impossible owing to faults it does not configure the network flow and sends an error signal to the user of the control application. Configuration of the flows is performed via the remote control application which oversees and monitors them fully by means of the configuration of each node and the reception of alarm signals in real time from the controller of each node and from the latter, in turn, from the ports and/or the matrix. Namely, the control application tells each node what it must do in a particular case.
   1. the central control application seeks an alternative and separate inactive path for a given network flow.
   2. If this path is found
      a. it sends configuration commands for the path to the node controllers concerned
      b. The controller for the initial node of the flow will reserve an input port as "protection" for the input port which is the source of the flow to be protected.
      c. The controller for the terminal node of the flow instead will be activated so as to keep an input port redundant in relation to an output port.
      d. The network nodes will be activated so as to configure a redundancy node flow which during operation transfers energy.
      e. If and when the active network flow is interrupted as a result of faults, if a protection flow is configured, the initial and terminal nodes of this flow switch it to the redundancy flow.

Two potential "paths" for end-to-end energy propagation within the network therefore exist, only one of them being active.

The 1+1 protection may be applied also to "open input flows", i.e. those flows where the active flow and the redundant flow are associated with input ports of different network terminal nodes.

In this case, the protection activates only the selector switch of the matrix of the output node. The 1+1 network protection applied to end-to-end flows has the function of improving the reliability and availability of the service for transporting the energy across the network.

The terminal type nodes may also be used in particular to achieve significant results in terms of energy efficiency and minimization of energy costs.

In particular it may be useful at the terminal points of the network, in particular when these correspond to a user/producer, to be able to select the supply source on the basis of different tariffs such as those which may be available on an open energy market.

In fact only the terminal nodes of the network have the logic which enables the switch of the matrix to operate on the basis of economic conditions which are linked to purchase/sale of electric energy.

The intermediate node of the network is located within a homogeneous system and within the same economic system. Control of this node will be activated by the remote control application in particular for the configuration of end-to-end flows and configuration and activation of the associated protection systems.

It is therefore clear how the apparatus according to the present invention allows an operator who purchases, uses, produces and sells electric energy to operate in an optimized manner on an open electric energy market.

In addition, the apparatus is able to choose from among the various sources of exchanged energy the information relating to the environmental impact of each source (for example CO₂ emissions or pollution produced by other gases); consequently, it ensures, on the one hand, rigorous application of the environmental safety regulations, with the consequent economic benefits which may be derived from environmentally friendly policies, and, on the other hand, it helps maintain and safeguard the ecosystem and reduce pollution in its various forms.

## Claims

1. Apparatus for forming electricity network nodes, **characterized in that** it comprises two input/output sides (A, B) respectively, each of which comprises a plurality of input ports (INB1,...,INBn; INA1,...,INAn) and a plurality of output ports (OUTA1,...,OUTAn; OUTB1,...,OUTBn) which receive energy from a respective input port via a control matrix (1000) and allow it to flow out externally and **in that** said apparatus is provided internally with local control and management means (1350) which are connected to the matrix and the ports by means of a corresponding bus.

2. Apparatus according to Claim 1, **characterized in that** each input port (INB1,...,INBn; INA1,..., INAn) and output port (OUTA1,...,OUTAn; OUTB1,...,OUTBn) comprises an electronic system with memories which store in digital format the expected values of each parameter and for each of them the permitted tolerance range and means for analog/digital conversion of the signals received at the input so as to allow comparison with the stored digital values.

3. Apparatus according to Claim 1, **characterized in that** said matrix (1000) is an electric matrix.

4. Apparatus according to Claim 1, **characterized in that** said matrix (1000) comprises a first set of programmable selector switches (1100) and a second set of programmable selector switches (1200) and a control logic (1300) which operates them on the basis of information which is set by the local controller (1350).

5. Apparatus according to Claim 1, **characterized in that** the matrix (1000) comprises means for generating alarm signals which are sent to the node controller (1350) in the event of faults being detected within the node and/or the matrix itself.

6. Apparatus according to Claim 1, **characterized in that** the input/output ports are configured so as to protect each other.

7. Electricity network for conveying electric energy, **characterized in that** it comprises nodes according to Claim 1 which are interconnected.

8. Electricity network according to Claim 7, **characterized in that** it comprises terminal network nodes which are crossed by flows which come from/are directed towards the outside of the network and/or intermediate network nodes which are crossed by flows which come from/are directed only from/towards other network nodes.

9. Electricity network according to Claim 8, **characterized in that** it has end-to-end connections between terminal nodes.

10. Electricity network according to Claim 8, **characterized in that** it has peer-to-peer connections between intermediate nodes.

11. Electricity network according to Claim 9, **characterized in that** the node flows are one-way.

12. Electricity network according to Claim 9, **characterized in that** the node flows are one-way, but in opposite directions resulting in two-way flows.
